# EUROPEAN PATENT SPECIFICATION

(11) **EP 3 919 297 B1**
(45) Date of publication and mention of the grant of the patent: **14.02.2024**
(21) Application number: 21176020.2
(22) Date of filing: 26.05.2021
(51) Int. Cl.: B60C 23/04, B60C 29/06, B60C 29/00

(54) **TIRE INFLATION VALVE EQUIPPED WITH ADJUSTING SYSTEM FOR A TPMS SENSOR**
REIFENFÜLLVENTIL MIT EINSTELLSYSTEM FÜR EINEN TPMS-SENSOR
SOUPAPE DE GONFLAGE DE PNEUMATIQUES ÉQUIPÉE D'UN SYSTÈME DE RÉGLAGE POUR UN CAPTEUR TPMS

(30) Priority: 05.06.2020 IT 202000013402
(43) Date of publication of application: 08.12.2021
(73) Proprietor: Wonder SPA, 26100 Cremona (CR) (IT)
(72) Inventor: CAPELLI, Andrea, I-26100 CREMONA (IT); CAZZANTI, Stefano, I-26100 CREMONA (IT); GALLI, Giancarlo, I-26100 CREMONA (IT)
(74) Representative: Gualeni, Nadia

(56) References cited:
- EP-A1- 1 914 093
- EP-A1- 3 178 675
- CN-A- 103 317 980
- CN-U- 202 186 247
- FR-A1- 3 058 360
- US-A1- 2014 318 231

## Description

The present invention relates to the sector of road wheel tire inflation valves, in particular for vehicles, where the term vehicles generally refers to motor vehicles, vans, trucks, motorcycles or, in general, road transport means.

More in detail, the invention relates to a valve of the clamp-in type, with controlled tightening, designed to be used in the field of Tire Pressure Monitoring System technology (TPMS), in which electronic sensors for detecting and transmitting certain operating parameters of the tires, in particular pressure, but also temperature, for example, are directly mounted on the valve itself and the valve is fastened to the wheel by means of a hole made in the rim.

The metal valves of the clamp-in type generally consist of a shaped head, usually cylindrical or hemispherical or polygonal, which is associated with a TPMS sensor, and of an elongated stem (or shank) which allows tire inflation/deflation operations (by means of a suitable inner valve) and the fastening of the valve itself to the wheel rim by means of suitable screw locking means.

In the example of the Figures, the stem 8 has a straight course; in a different embodiment the stem has curvatures or folds.

In the sector of inflation valves which may be associated with a TPMS, there is a need to have different types of valves available, depending on the shape, material and thickness of the rim, the thickness, position and diameter of the hole for inserting the valve, just to name a few.

Furthermore, while the use of a TPMS is mandatory for motor vehicles, for trucks the sensor is still considered an accessory, although very advantageous in terms of safety and efficiency (regular wear of the tire, possibility of traveling more kilometers, less frequent tire retreads, cost and emission reductions). In the near future, the use of the TPMS will also become mandatory for trucks.

With particular reference to truck tire inflation valves, many types exist depending on the tire and the related rim, and on the part of the vehicle (tractor or trailer) mounting the tire. Furthermore, such valves must allow the access to the inflation systems even in complex situations, such as in the case of inner or twin wheels. Therefore, the types of valves for trucks are many more than those for motor vehicles. Such valves therefore have different types of "feet" (areas of the seal and of the threaded portion for the nut), they have very variable lengths, and may have one or more folds in the shank area (also called "shaft").

Although such valves are now standardized, the introduction of the TPMS sensor leads to new and complex variables to be managed, such as the need to have a dedicated space for the valve head and for the TPMS sensor which must be oriented depending on the shape of the rim, a dedicated space to tighten the sensor during assembly, without forgetting the requirement of safety of the sensor against possible impacts when mounting the tire on the rim.

In the sector of tire inflation valves for vehicles, and in particular for trucks, the need to have a valve and a relative adjustable valve-sensor system which may adapt to different situations of use is therefore felt. Examples of adjustable tire inflation valves of the state of the art are disclosed in documents EP 1 914 093 A1, CN 202 186 247 U, EP 3 178 675 A1, CN 103 317 980 A and FR 3 058 360 A1.

It is the object of the present invention to provide a tire inflation valve for vehicles, and in particular for trucks, equipped with a system for adjusting the position of the TPMS sensor.

Such object is achieved by a valve with an adjustable insert according to claim 1 and by a valve-sensor system according to claim 11. Other embodiments of the valve according to the invention are described in the subsequent claims.

Further features and advantages of the present invention will be more comprehensible from the following description of a preferred embodiment thereof given by way of non-limiting examples, in which:
- Figures 1 and 2 show a sectional view of a valve in accordance with the present invention, in an alternative embodiment in which the head is in one piece with the shank, respectively with (Figure 2) and without (Figure 1) the system for adjusting the position of the TPMS sensor;
- Figures 3A to 3D show the steps for assembling a valve in accordance with the present invention and for assembling the respective TPMS sensor, the positioning of the valve in the hole of the rim (3A), the tightening of the valve on the rim (3B), the positioning and adjustment of the TPMS sensor on the head of the valve (3C), the tightening of the TPMS sensor on the valve, respectively;
- Figures 4A and 4B show a valve not forming part of the present invention equipped with a protective cap for the head, in an alternative embodiment;
- Figures 5A and 5B show a valve not forming part of the present invention equipped with a protective cap for the head;
- Figures 6A and 6B show a valve in which the head may be separated from the shank;
- Figures 7A to 8J show in detail an adjustable insert for adjusting the position of the TPMS sensor of the valve in accordance with the present invention, in accordance with a single-component alternative embodiment, respectively:
   - 7A, top axonometric view;
   - 7B, bottom axonometric view;
   - 8A, bottom view;
   - 8B, top view, with indication of the section planes H and J;
   - 8H, sectional view along the plane H;
   - 8J, sectional view along the plane J;
- Figures 9A to 13C show in detail an adjustable insert for adjusting the position of the TPMS sensor of the valve in accordance with the present invention, in accordance with a two-component alternative embodiment, respectively:
   - 9, top axonometric view of the assembly;
   - 10A, bottom view of the assembly;
   - 10B, top view of the assembly, with indication of the section planes H and J;
   - 10F, sectional view of the assembly along the plane F;
   - 10G, sectional view of the assembly along the plane G;
   - 11, exploded view of the adjustment system of Figure 9A;
   - 12, top view of the external component, with indication of the section planes C and D;
   - 13D, sectional view of the external component along the plane D;
   - 13C, sectional view of the external component along the plane D;

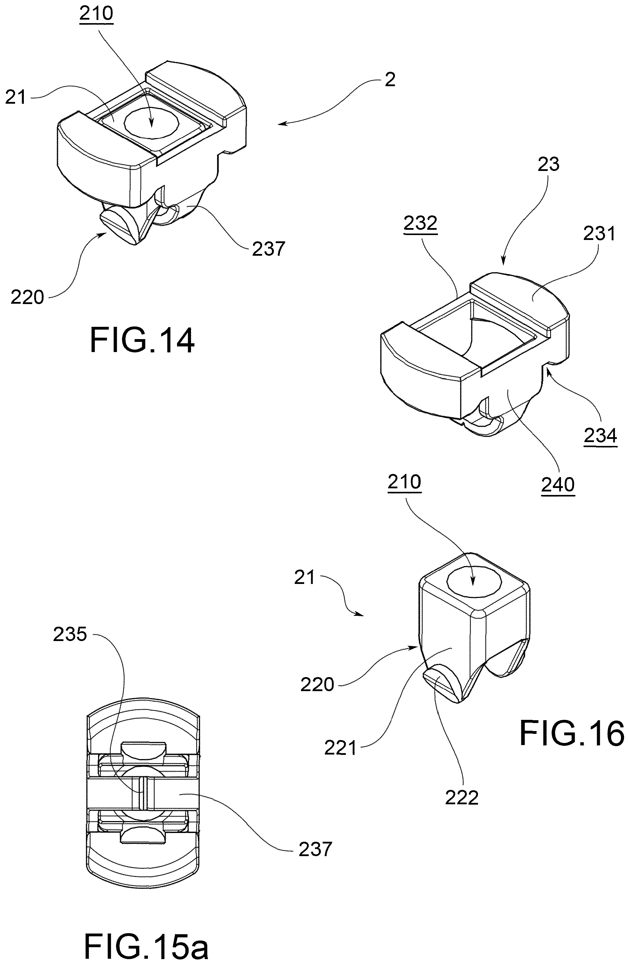

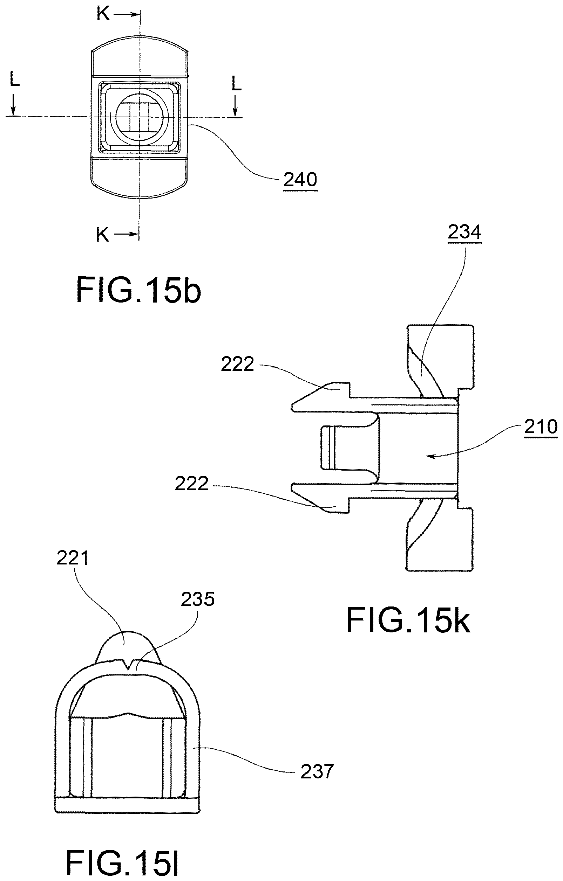

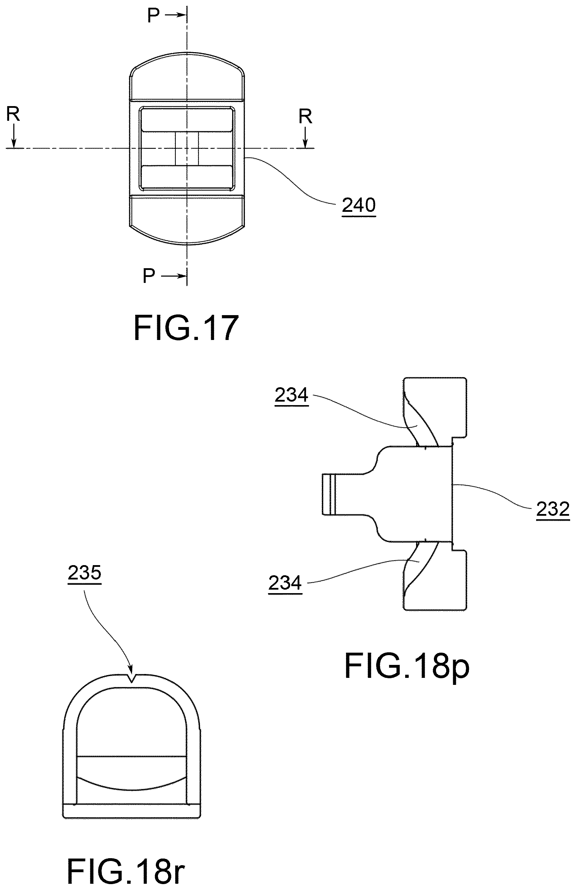

- Figures 14A to 21 show in detail an adjustable insert for adjusting the position of the TPMS sensor of the valve in accordance with the present invention, in accordance with a further two-component alternative embodiment, respectively:
   - 14, top axonometric view of the assembly;
   - 15A, bottom view of the assembly;
   - 15B, top view of the assembly, with indication of the section planes K and L;
   - 15K, sectional view of the assembly along the plane K;
   - 15L, sectional view of the assembly along the plane L;
   - 16, exploded view of the adjustment system of Figure 16A;
   - 17, top view of the external component, with indication of the section planes R and P;
   - 18R, sectional view of the external component along the plane R;
   - 18P, sectional view of the external component along the plane P;

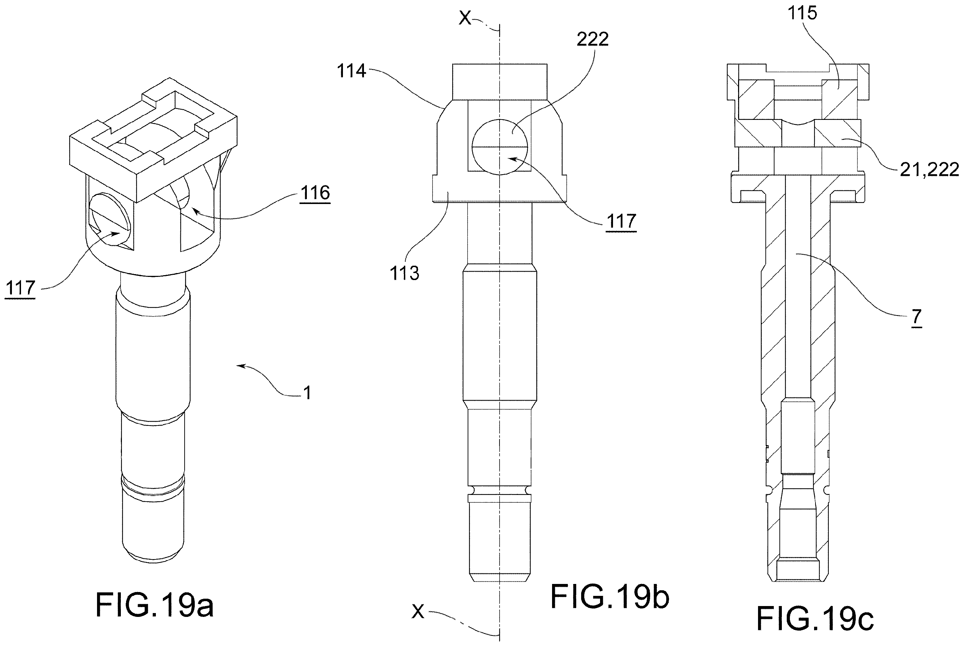

- Figures 19A to 20E show a valve in accordance with the present invention, in a further alternative embodiment, with a single-component system for adjusting the position of the TPMS sensor, respectively:
   - 19A, top axonometric view of the valve;
   - 19B, side view of the valve;
   - 19C, side sectional view of the valve;
   - 20A, axonometric view of the adjustment system;
   - 20B, side view of the adjustment system;
   - 20C, front view of the adjustment system;
   - 20D, side sectional view of the adjustment system;
   - 20E, front sectional view of the adjustment system;

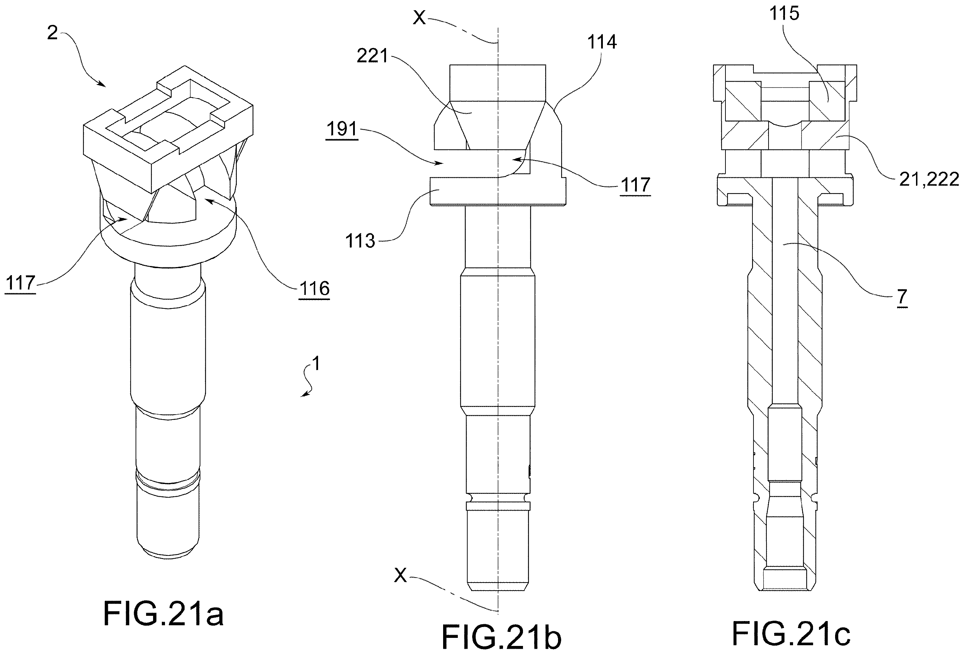

- Figures 21A to 22E show a valve in accordance with the present invention, in a still further alternative embodiment, with a single-component system for adjusting the position of the TPMS sensor, respectively:
   - 21A, top axonometric view of the valve;
   - 21B, side view of the valve;
   - 21C, side sectional view of the valve;
   - 22A, axonometric view of the adjustment system;
   - 22B, side view of the adjustment system;
   - 22C, front view of the adjustment system;
   - 22D, side sectional view of the adjustment system;
   - 22E, front sectional view of the adjustment system;

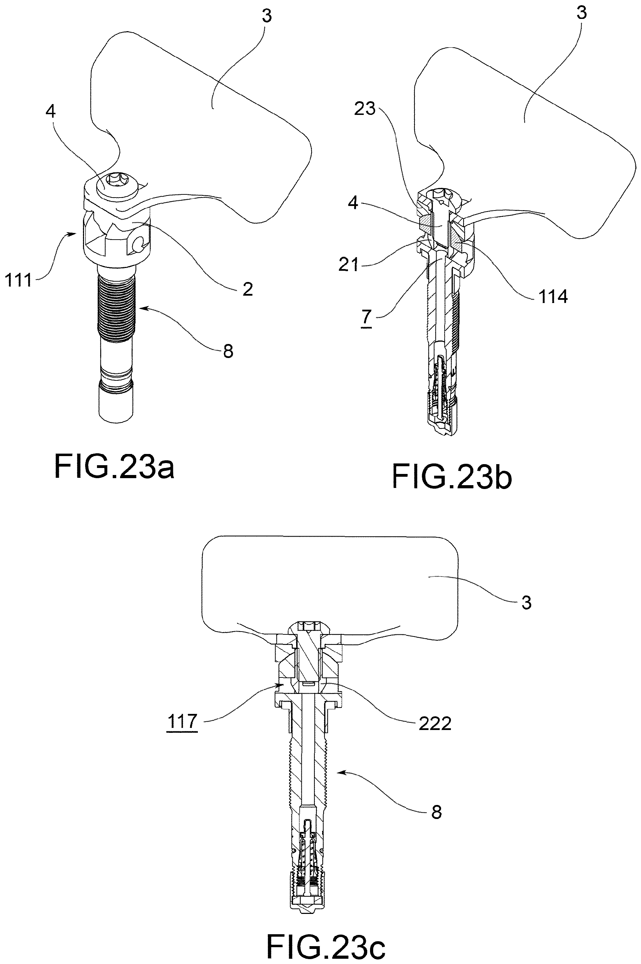

- Figures 23A to 23C show the valve in accordance with the present invention equipped with a position adjustment system with the respective TPMS sensor mounted, in an axonometric view, in an axonometric sectional view and in a front sectional view.

In the above Figures, identical or similar elements are indicated with the same reference numerals.

With reference to the above Figures, 1 overall indicates a vehicle tire inflation valve (hereinafter valve 1) equipped with a system for adjusting the position of the TPMS sensor, in accordance with the present invention.

The valve 1 is, for example, made of metal or plastic, of the clamp-in type, for inflating tires, and is suitable for being stably associated with a sensor 3 for TPMS technology. The valve 1 may also be used without the sensor 3.

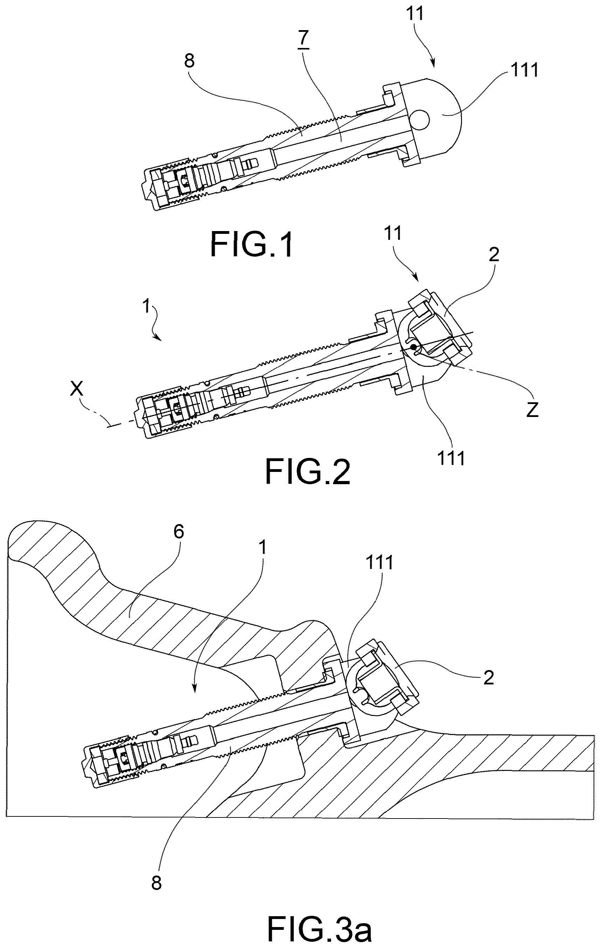

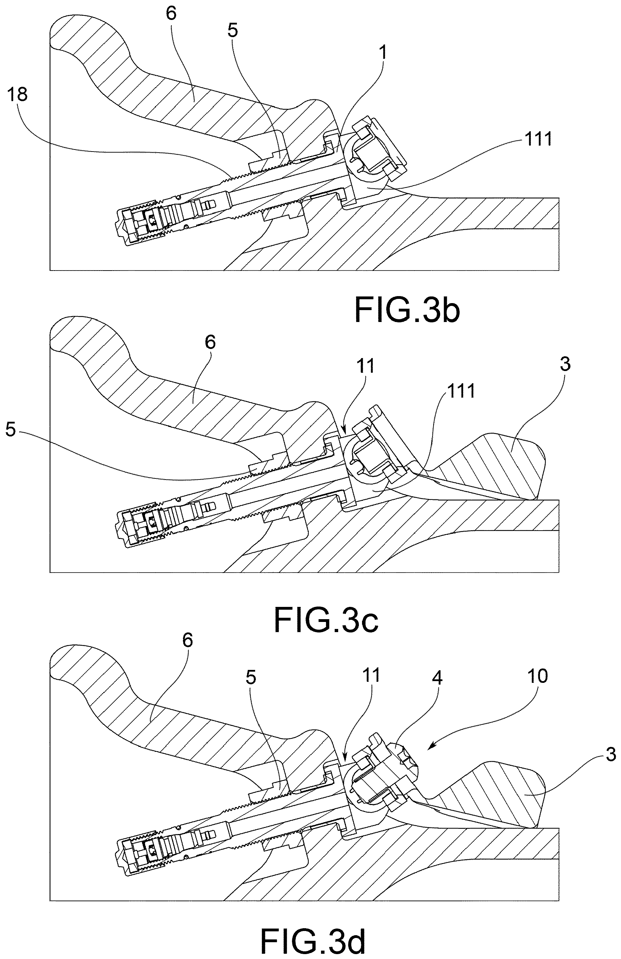

With particular reference to Figures 3A to 3D, the step of positioning (3A) and fastening (3B) the valve 1 and the step of positioning (3C) and fastening (3D) the relative sensor 3 on a rim 6 of a wheel of a motor vehicle to form a valve-sensor unit 10 are shown. The sensor 3 is positioned tangential to the rim 6 (inside the air chamber delimited by the relative tire, not shown), while the valve 1 protrudes externally with respect to the rim 6 and is stably fastened thereon by means of a locking nut 5 suitable for being screwed onto a thread 18 provided on the stem 8 of the valve 1.

In order to stably associate the two components, both the valve 1 and the sensor 3 are crossed by a connection means 4, for example, a screw or a pin.

The valve 1 develops along a longitudinal axis X and comprises a stem 8 and a head 11.

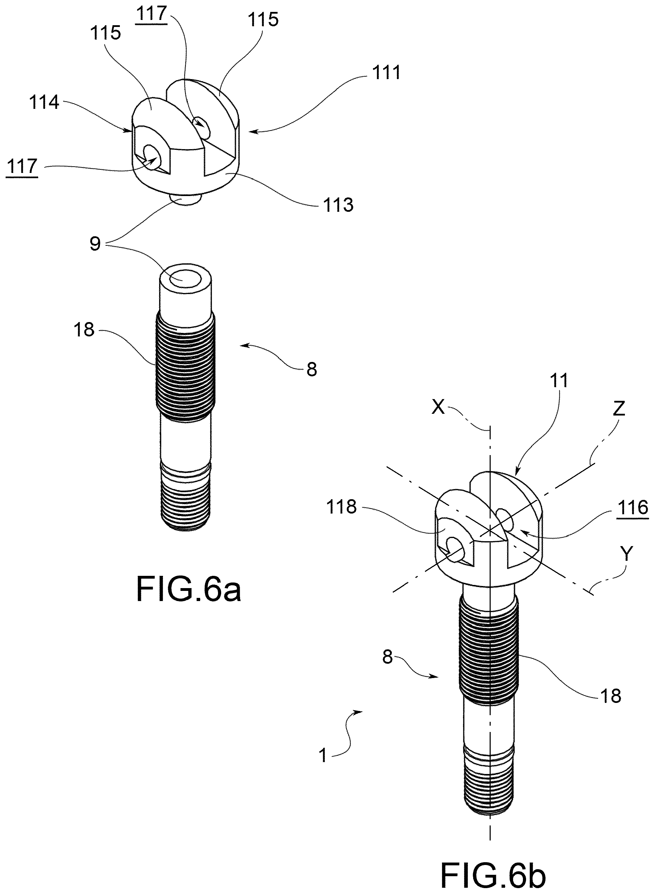

In Figure 6B the valve 1 is made in one piece, i.e., the stem 8 and the head 11 may not be separated from each other. In Figure 6A, the stem 8 and the head 11 are different and separate elements, connectable to each other by means of connection means 9, for example a screw, to make the valve 1.

The valve 1 in accordance with the present invention comprises, at the head 11, a means for adjusting the position of the TPMS sensor. The head 11 of the valve 1 is itself a means for adjusting the position of the TPMS sensor.

In particular the head 11 comprises a head body 111 connected (Figure 6B) or connectable (Figure 6A) to the stem 8, and an adjustable insert 2 connectable to the sensor 3. The adjustable insert 2 may be hinged to the head body 111 so as to rotate with respect thereto about the rotation axis Z.

The head body 111 is convex, for example, hemispherical or cylindrical or elliptical. In the example of Figure 1, the head 11 is hemispherical; in the example of Figure 19A it is cylindrical.

The head body 111 is axially drilled, i.e., the channel 7 present inside the stem 8 opens up at the head 11.

As it may be noticed in Figures 6A and 6B, the head body 111 has a substantially flat lower portion 113 from which a substantially hemispherical upper portion 114 develops.

The upper portion 114 comprises a central groove 116 extending along a horizontal axis Y. The central groove 116 divides the upper portion 114 of the head body 111 into two side portions 115 facing each other. The central groove 116 constitutes the seat in which the adjustable insert 2, or at least a part thereof, is rotatably inserted.

Both side portions 115 are equipped with a radial hole 117, a through hole or a blind hole, which extends along a transverse axis Z. The radial holes 117 face each other. The radial holes 117 constitute the rotating locking seats of the adjustable insert 2 or of at least a part thereof.

The upper portion 114 comprises at least one pair of side grooves 118, each on an outer face of the side portions 115, which may be used as a holder for a tool such as, for example, a wrench.

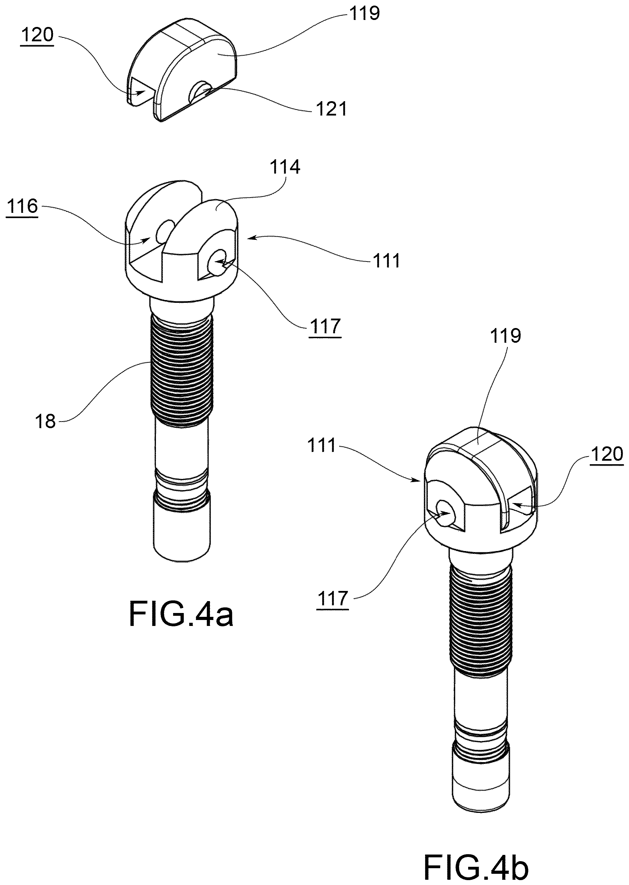

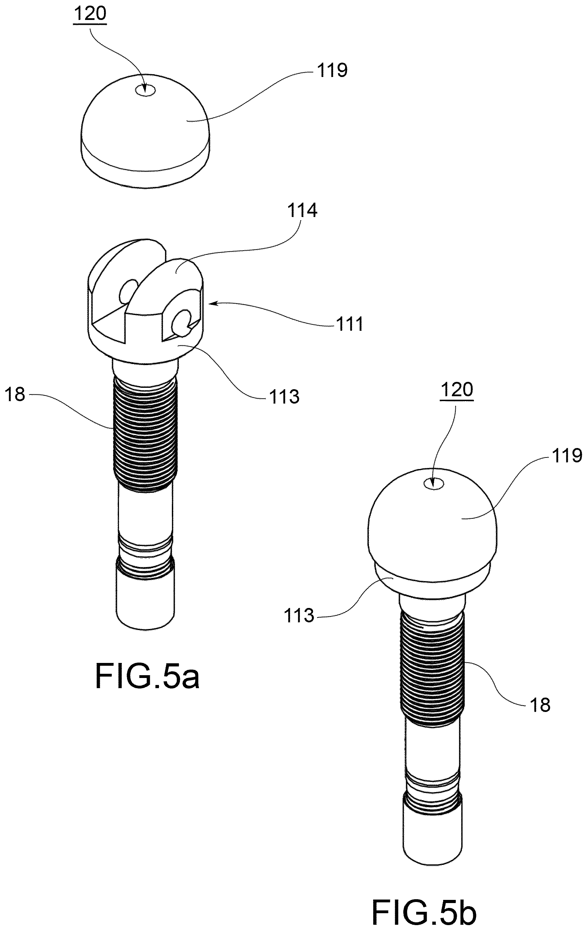

Preferably, the valve 1 further comprises a cap 119 to cover the head body 111, to protect the tire during the assembly of the valve 1. In Figure 4A, the cap 119 is insertable in the central groove 116 to complete the hemispherical upper portion 114 (4B). In Figure 5A, the cap 119 is hemispherical and fittable to cover, at least partially, the hemispherical upper portion 114 (5B).

Preferably, the cap 119 comprises at least one pair of protruding tabs 121, insertable in suitable seats of the head body 111, for example, in the radial holes 117, to facilitate the fastening thereof on the valve 1.

Preferably, the cap 119 comprises at least one recess 120 in which to insert a tool, for example a screwdriver, to facilitate the removal thereof from the head body 111 of the valve 1.

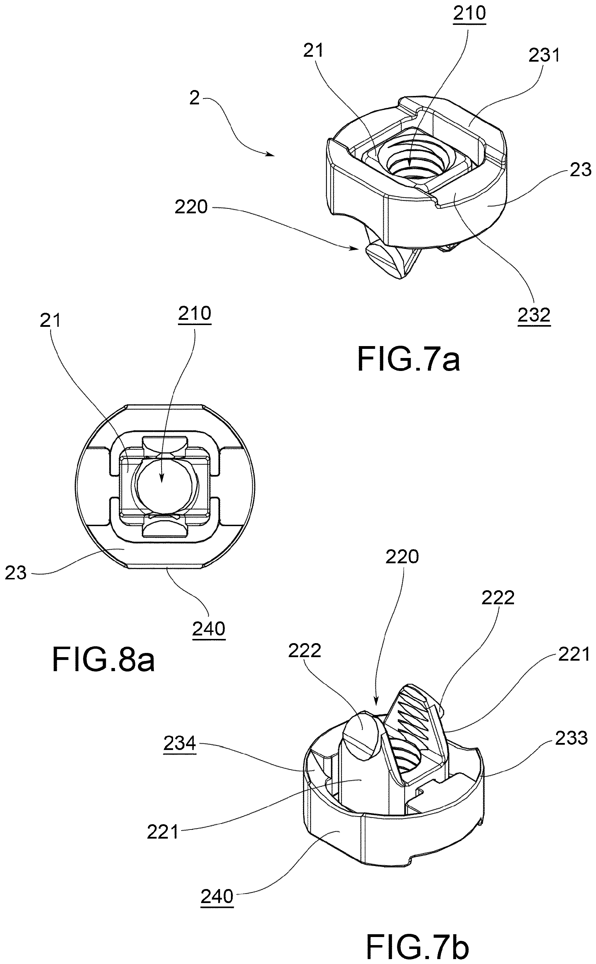

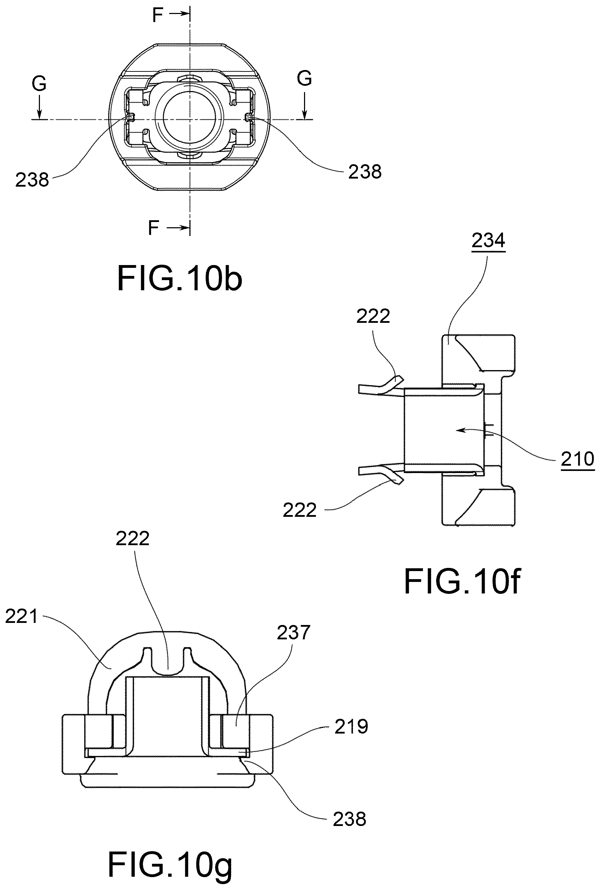

Figures 7A to 22E show some embodiments of the adjustable insert 2 which may be hinged to the head body 111, in accordance with the present invention.

The adjustable insert 2 comprises an inner body 21 equipped with a central seat 210 for the insertion of the connection means 4 (to connect the valve 1 and the sensor 3), and with an engagement portion 220 to allow the connection thereof with the head body 111. Preferably, the central seat 210 is a threaded or self-tapping hole.

In the alternative embodiments relating to Figures 7A to 18R, the engagement portion 220 is inserted into the radial holes 117 from the inside of the central groove 116 made in the head body 111.

In such embodiments, the engagement portion 220 comprises a pair of flexible legs 221, suitable for elastically deforming (moving closer) to allow the at least partial insertion of the adjustable insert 2 inside the central groove 116 made in the head body 111. In such embodiment, the flexible legs 221 are arranged inside the head body 111.

Each flexible leg 221 is equipped, at the end, with a radial protrusion 222 suitable for fitting into the radial hole 117 to achieve the hinged connection between the adjustable insert 2 and the head body 111. The radial protrusion 222 protrudes towards the outside of the flexible leg 221, on the side opposite with respect to the central seat 210. The flexible legs 221 elastically deform, first by moving closer to allow the insertion of each radial protrusion 222 into the relative radial hole 117 of the head body 111, and then by moving away to keep each radial protrusion 222 inserted in the relative radial hole 117.

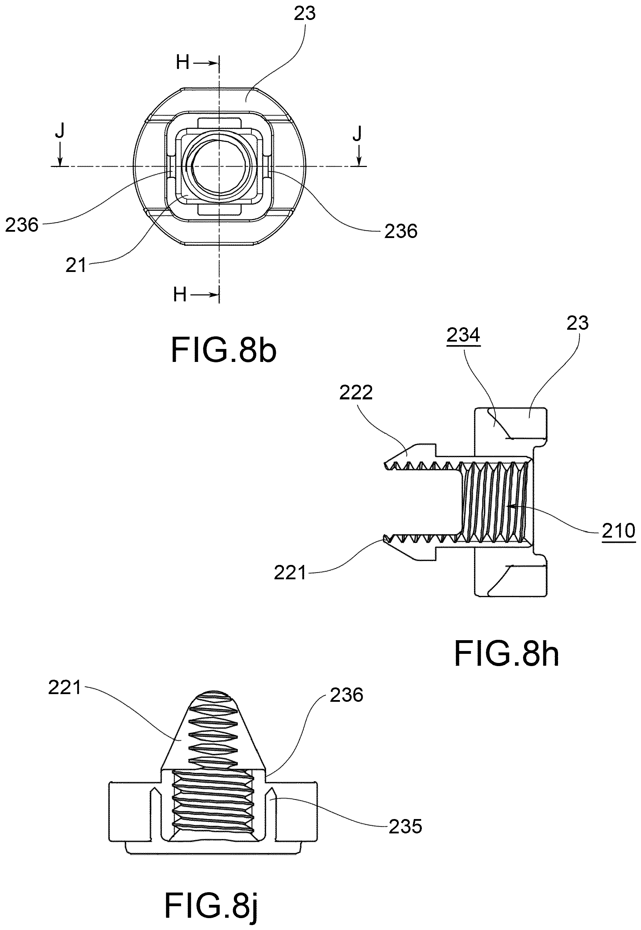

As it may be seen in Figures 8H, 10F and 17K, the central seat 210 ends before the radial protrusions 222 so that the connection means 4, inserted through such central seat 210, may protrude below it and act as a radial stop for the flexible legs 221, so that they may not move closer to each other. Thereby, each radial protrusion 222 remains firmly inserted into the relative radial hole 117 of the head body 111 to achieve the hinged connection of the adjustable insert 2. Once the connection means 4 is correctly inserted, the adjustable insert 2 is firmly hinged to the head body 111, as shown in Figure 23C.

In the alternative embodiments relating to Figures 19A to 22E, the engagement portion 220 is inserted into the radial holes 117 from the outside of the central groove 116 made in the head body 111. Furthermore, in such embodiments, the radial protrusion 222 also forms the inner body 21 equipped with the central seat 210.

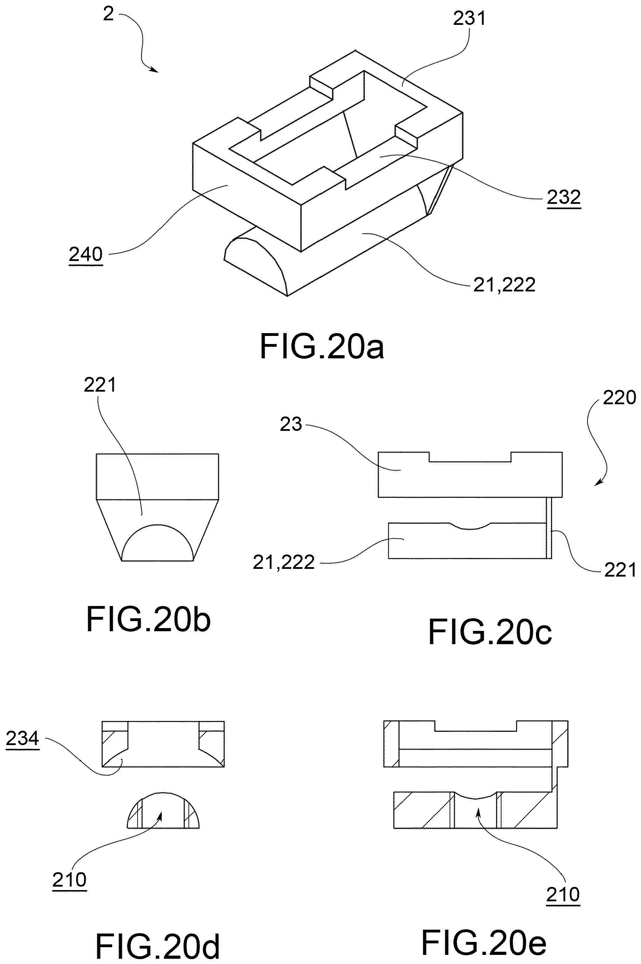

In the embodiment of Figure 20A, the engagement portion 220 is inserted into the radial holes 117, laterally with respect to the valve 1. In such example, the engagement portion 220 comprises a flexible leg 221 equipped, at the end, with a radial protrusion 222 suitable for fitting into the radial holes 117 to achieve the hinged connection between the adjustable insert 2 and the head body 111. The radial protrusion 222 protrudes towards the inside of the flexible leg 221 and is long enough to simultaneously occupy both radial holes 117.

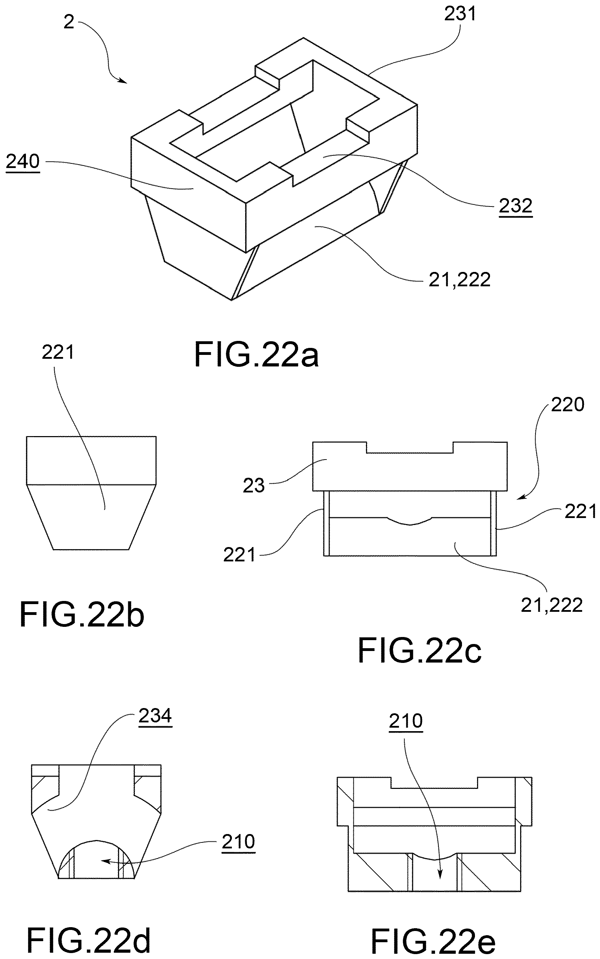

In the embodiment of Figure 22A, the side portions 115 facing each other are equipped with an inlet port 191 suitable for allowing the access of the engagement portion 220, which is inserted frontally with respect to the valve 1, into the radial holes 117. In such example, the engagement portion 220 comprises a pair of legs 221 connected to each other by a radial protrusion 222 suitable for fitting into the radial holes 117 to achieve the hinged connection between the adjustable insert 2 and the head body 111. The radial protrusion 222 is long enough to simultaneously occupy both radial holes 117.

In such embodiments (Figures 20A and 22A), the legs 221 are arranged outside the head body 111.

Preferably, the adjustable insert 2 further comprises an outer body 23 which the inner body 21 is arranged in or connected with.

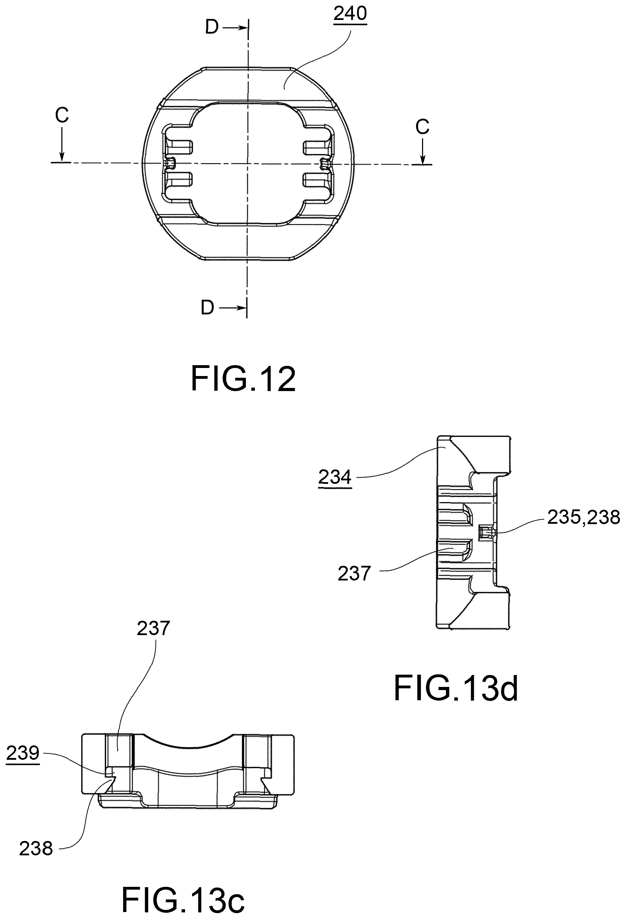

Preferably, the outer body 23 comprises a yielding portion 235, obtained, for example, with a pre-incision or as a thinning in the thickness of the piece (Figures 8J and 16B) or of the legs 221, or even as a protruding element or a tab (Figure 13D), suitable for yielding in the event of excessive stress acting on the adjustable insert 2. Such yielding portion 235 acts as a guarantee seal or tamper proof to indicate that the adjustable insert 2 has already been used. Advantageously, the yielding portion 235 is arranged on the outer body 23 so that the tamper proof function does not compromise the fastening of the sensor 3 to the valve 1.

The outer body 23 is equipped with an upper surface 231 which defines a support surface for the sensor 3. Advantageously, therefore, the outer body 23 provides the valve 1 with a greater surface for supporting the sensor 3.

Preferably, the outer body 23 is equipped, at the upper surface 231, with an upper seat 232 shaped to accommodate a corresponding possible protrusion on the bottom of the sensor 3, and to act as a constraint to the undesired rotation of the sensor itself.

Preferably, the outer body 23 is equipped, at the lower face 233, with at least one lower seat 234 shaped to at least partially receive the hemispherical upper portion 114 of the head body 111.

Preferably, the outer body 23 is provided with at least one pair of side recesses 240 to facilitate the passage of a tool such as, for example, a wrench for holding the head during tightening.

In the embodiment of Figures 7A to 8J and 19A to 22E, the adjustable insert 2 is a single piece, and therefore the outer body 23 and the inner body 21 are made in one piece. In such embodiment, the adjustable insert 2 is preferably made of plastic material.

In the embodiment of Figures 7A to 8J, the inner body 21 is substantially a parallelepiped crossed by a threaded hole which acts as a central seat 210 for screwing the connection means 4. From two opposite sides of the inner body 21, a pair of legs 221 facing each other, each preferably triangular in shape, extends downwards. Each leg 221 is equipped with a radial outer protrusion 222 for the hinged connection between the adjustable insert 2 and the head body 111. Preferably, also the inner face of the legs 221 is at least partially threaded and is the continuation of the central seat 210 for the connection means 4. The outer body 23 is substantially cylindrical and surrounds the inner body 21. The outer body 23 is connected to the inner body 21 by means of a pair of bridges 236. Taking the inner body 21 as reference, the bridges 236 are arranged on the two opposite free sides of the inner body 21. The bridges 236, in addition to connecting the outer body 23 to the inner body 21, are also the yielding portions 235 which act as a tamper proof to indicate whether the adjustable insert 2 has already been used. The outer body 23 is further equipped with the upper seat 232 to accommodate any protrusion on the bottom of the sensor 3, with the lower seat 234 to accommodate the hemispherical upper portion 114 of the head body 111, and with the side recesses 240 to facilitate the passage of a tool.

In the embodiment of Figures 20A to 20E, the inner body 21 is substantially a parallelepiped crossed by a hole which acts as a central seat 210 for screwing the connection means 4. On one side of the inner body 21, a leg 221, preferably triangular in shape, extends downwards. The leg 221 is equipped with a radial protrusion 222 for the hinged connection between the adjustable insert 2 and the head body 111. The radial protrusion 222 is equipped with a threaded hole which is the continuation of the central seat 210 for the connection means 4. The outer body 23 is substantially parallelepiped and is above the inner body 21. The outer body 23 is connected to the inner body 21 by means of the leg 221. The outer body 23 is further equipped with the upper seat 232 to accommodate any protrusion on the bottom of the sensor 3, with the lower seat 234 to accommodate the hemispherical upper portion 114 of the head body 111, and with the side recesses 240 to facilitate the passage of a tool.

In the embodiment of Figures 22A to 22E, the inner body 21 is substantially a parallelepiped crossed by a hole which acts as a central seat 210 for screwing the connection means 4. From two opposite sides of the inner body 21, a pair of legs 221 facing each other, each preferably triangular in shape, extends downwards. The legs 221 are connected by the radial protrusion 222 for the hinged connection between the adjustable insert 2 and the head body 111. The radial protrusion 222 is equipped with a threaded hole which is the continuation of the central seat 210 for the connection means 4. The outer body 23 is substantially parallelepiped and is above the inner body 21. The outer body 23 is connected to the inner body 21 by means of the legs 221. The outer body 23 is further equipped with the upper seat 232 to accommodate any protrusion on the bottom of the sensor 3, with the lower seat 234 to accommodate the hemispherical upper portion 114 of the head body 111, and with the side recesses 240 to facilitate the passage of a tool.

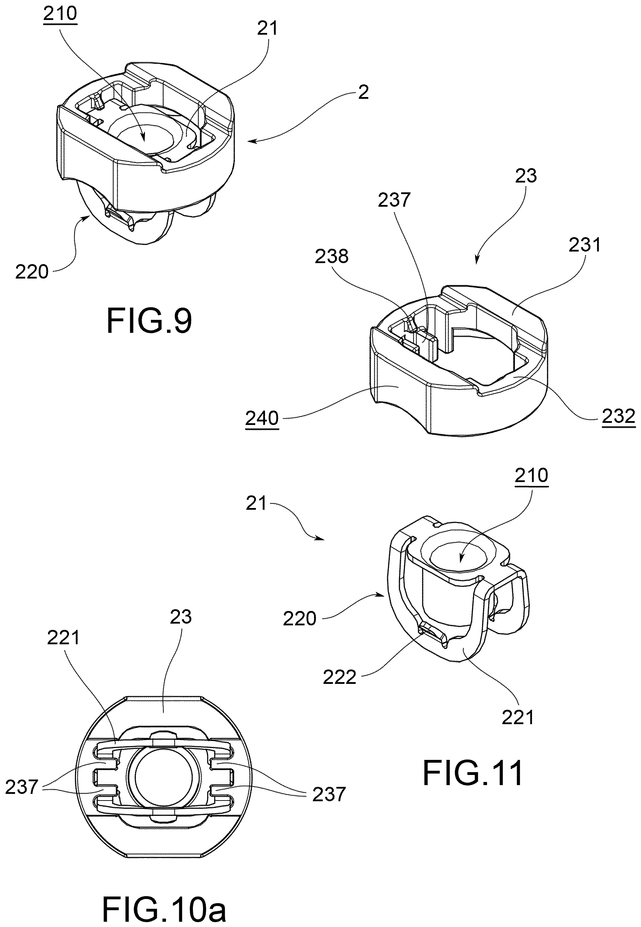

In the embodiment of Figures 9 to 18R the adjustable insert 2 is two-component, and therefore the outer body 23 and the inner body 21 are different elements assembled mechanically.

Preferably, in the embodiment of Figures 9 to 13C, the outer body 23 is made of plastic material and the inner body 21 is made of metal. Advantageously, the fact that the inner body 21 is made of metal ensures a more resistant fastening between the valve 1 and the sensor 3.

In a further embodiment, the inner body 21 consists of different elements, made of plastic and/or metal, assembled mechanically.

In the embodiment of Figures 9 to 13C, the inner body 21 is substantially a cylinder crossed by a threaded or self-tapping hole which acts as a central seat 210 for screwing the connection means 4. A pair of legs 221, facing each other, each preferably U-shaped or C-shaped, extend downwards from two opposite sides of the inner body 21. Each leg 221 is equipped with a radial outer protrusion 222 for the hinged connection between the adjustable insert 2 and the head body 111. The outer body 23 is substantially cylindrical and surrounds the inner body 21. The outer body 23 is connected in an interlocking manner to the inner body 21 by means of abutment elements 237, 238. Preferably, the outer body 23 comprises, internally protruding from opposite sides, at least one pair of lower abutment elements 237 and one pair of top abutment elements 238 which define, between each other, a gripping seat 239 for an upper edge 219 of the inner body 21. Preferably, the top abutment element 238 is shorter than the lower abutment element 237 and is such as to allow the upper edge 219 of the inner body 21 to be inserted into the gripping seat 239 of the outer body 23 and prevent it from coming out. Taking the inner body 21 as a reference, the abutment elements 237, 238 are arranged at the two facing free sides of the inner body 21. The top abutment elements 238, in addition to allowing the interlocking between the outer body 23 and the inner body 21, are also the yielding portions 235 which act as a tamper proof to indicate whether the adjustable insert 2 has already been used. The outer body 23 is further equipped with the upper seat 232 to accommodate any protrusion on the bottom of the sensor 3, with the lower seat 234 to accommodate the hemispherical upper portion 114 of the head body 111, and with the side recesses 240 to facilitate the passage of a tool.

Preferably, in the example embodiment of Figures 14 to 18R, both the outer body 23 and the inner body 21 are made of plastic material.

In the example embodiment of Figures 14 to 18R, the inner body 21 is substantially a parallelepiped crossed by a self-tapping hole which acts as a central seat 210 for screwing the connection means 4. From two opposite sides of the inner body 21, a pair of legs 221 facing each other, each, preferably, substantially triangular in shape, extends downwards. Each leg 221 is equipped with a radial outer protrusion 222 for the hinged connection between the adjustable insert 2 and the head body 111. The outer body 23 is substantially rectangular and surrounds the inner body 21. The inner body 21 is slidably inserted inside the outer body 23 and is held by means of abutment elements 237, 238. Preferably, the outer body 23 is equipped with a lower abutment element 237, preferably U-shaped or C-shaped, and with at least one pair of top abutment elements 238 which define, between each other, a gripping seat 239 for the inner body 21. The lower abutment element 237, in addition to allowing the retention of the outer body 23, is also the yielding portion 235 which acts as a tamper proof to indicate whether the adjustable insert 2 has already been used. The outer body 23 is further equipped with the upper seat 232 to accommodate any protrusion on the bottom of the sensor 3, with the lower seat 234 to accommodate the hemispherical upper portion 114 of the head body 111, and with the side recesses 240 to facilitate the passage of a tool.

Advantageously, the adjustable insert 2 is at least partially made of plastic material and acts as the sacrificial element of the valve-sensor unit 10 in the event of issues during the step of assembling the valve 1 on the tire: it is in fact preferable for the valve 1 to break, rather than the sensor 3, which is much more expensive. Furthermore, of the entire valve 1, it is preferable for the adjustable insert 2 to break, as it is more easily replaceable.

Advantageously, at least the outer body 23 of the adjustable insert 2 is made of plastic material and acts as the sacrificial element of the adjustable insert 2: it is in fact preferable for the outer body 23 to break, rather than the inner body 21, so as to always and in any case ensure that the sensor 3 is fastened to the valve 1.

It is therefore the object of the present invention a tire inflation valve 1 associable with a TPMS sensor, having a longitudinal development axis X and comprising a stem 8 ending in a head 11 equipped with a head body 111. Such valve comprises an adjustable insert 2 associable with a TPMS sensor 3 by means of a connection means 4 and hinged to the head body 111 to rotate about a transverse axis Z and allow the adjustment of the position of the sensor 3.

It is also the object of the present invention a tire inflation valve associable with a TPMS sensor, having a longitudinal development axis X and comprising a stem 8 ending in a head 11 equipped with a head body 111. The head body 111 comprises two side portions 115 facing each other and each equipped with a radial hole 117 extending along the transverse axis Z, said holes 117 facing each other and suitable to act as locking seats, in rotation, for an adjustable insert associable with a TPMS sensor.

It is also the object of the present invention an adjustable insert 2 for a tire inflation valve associable with a TPMS sensor, comprising an inner body 21 with a central seat 210 and an engagement portion 220 having at least one leg 221 equipped with a radial protrusion 222 insertable into the valve head to achieve a hinged connection between said valve and the sensor.

It is also the object of the present invention a valve-sensor system adaptable to different situations of use, comprising:
- a tire inflation valve 1 in accordance with the present invention;
- a TPMS sensor 3 associated with the adjustable insert 2 by means of a connection means 4,
   in which the connection means 4 fastens the adjustable insert 2 to the head body 111.

Innovatively, a tire inflation valve for vehicles, and in particular for trucks, in accordance with the present invention is equipped with a system for adjusting the position of the TPMS sensor which allows to achieve a single head 11 suitable for all needs.

Advantageously, the valve in accordance with the present invention, by virtue of the adjustable insert 2, allows to change the inclination of the TPMS sensor according to the different conditions of use.

Advantageously, the valve in accordance with the present invention, by virtue of the adjustable insert 2, is suitable for many types of sensors and for different sensor accommodation models and allows several customizations.

Advantageously, the valve in accordance with the present invention includes a head 11 shaped so as to leave free space for the working tools, facilitating the tightening on the rim and the mounting of the TPMS sensor.

Advantageously, the valve in accordance with the present invention is also suitable for applications without a TPMS sensor since the adjustable insert 2 is easily removable from the valve head 11.

Advantageously, by means of the valve in accordance with the present invention, the TPMS sensor may also be applied in a second step.

Advantageously, the valve in accordance with the present invention, by virtue of the presence of tamper proof elements, is capable of signaling whether a previous use or tampering has occurred.

Advantageously, the valve in accordance with the present invention is compatible with both perforated as well as non-perforated, threaded or self-tapping, connection screws 4 since the vent hole of the central channel 7 is positioned far from the screw and so as not be obstructed thereby.

In order to meet contingent and specific needs, those skilled in the art may make several changes and variants to the valve described above, all contained within the scope of the invention as defined by the following claims.

## Claims

1. A tire inflation valve (1) associable with a TPMS sensor, having a longitudinal development axis (X) and comprising:
a stem (8) ending in a head (11) equipped with a head body (111),
- an adjustable insert (2) associable with a TPMS sensor (3) by means of a connection means (4), and hinged to the head body (111) to rotate about a transverse axis (Z) and allow the adjustment of the position of the TPMS sensor (3);
wherein the adjustable insert (2) comprises an inner body (21) equipped with a central seat (210) for the insertion of the connection means (4), and with an engagement portion (220) to allow the connection thereof with the head body (111)
**characterized in that** the engagement portion (220) comprises at least one leg (221) equipped with a radial protrusion (222) insertable into a corresponding radial hole (117) of the head body (111) to achieve the hinged connection between the adjustable insert (2) and the head body (111).

2. A valve (1) according to claim 1, wherein the leg (221) is arranged outside or inside the head body (111).

3. A valve (1) according to any one of the preceding claims, wherein the adjustable insert (2) comprises an outer body (23) connected to the inner body (21), said outer body (23) being made of plastic material.

4. A valve (1) according to claim 3, wherein the outer body (23) comprises at least one yielding portion (235) acting as a tamper proof.

5. A valve (1) according to claim 3 or 4, wherein the outer body (23) is equipped with an upper surface (231) which defines a support surface for the TPMS sensor (3), and comprising
at least one upper seat (232) shaped to receive the bottom of the TPMS sensor (3),
and/or at least one lower seat (234) shaped to receive at least partially the head body (111),
and/or at least one pair of side recesses (240).

6. A valve (1) according to any one of claims 3 to 5, wherein said inner body (21) and said outer body (23) are made in one piece of plastic material.

7. A valve (1) according to any one of claims 3 to 5, wherein said inner body (21) and said outer body (23) are different elements mechanically assembled, and wherein also the inner body (21) is made of plastic material.

8. A valve (1) according to any one of claims 3 to 5, wherein said inner body (21) and said outer body (23) are different elements mechanically assembled, and wherein the inner body (21) is made of metal.

9. A valve (1) according to claim 7 or 8, wherein said inner body (21) is kept in position inside the outer body (23) by means of at least one lower abutment element (237) and at least one top abutment element (238).

10. A valve (1) according to any one of the preceding claims, wherein the head body (111) comprises two side portions (115) facing each other and equipped each with a radial hole (117) extending along the transverse axis (Z), said holes (117) facing each other and adapted to act as locking seats, in rotation, of the adjustable insert (2) or at least of a part thereof.

11. A valve-sensor system which may be adapted to different situations of use, comprising:
- a tire inflation valve (1) according to any one of claims 1 to 10;
- connection means (4);
- a TPMS sensor (3) associated with the adjustable insert (2) by means of the connection means (4),
wherein the connection means (4) fastens the adjustable insert (2) to the head body (111).

## Patentansprüche

1. Ein Reifenfüllventil (1), das mit einem TPMS-Sensor verknüpfbar bzw. verbindbar ist (*associable*), eine Längsachse (X) aufweist und Folgendes umfasst:
einen Schaft (8), der in einem Kopf (11) endet, der über einen Kopfkörper (111) verfügt,
- einen einstellbaren Einsatz (2), der mittels eines Verbindungsmittels (4) mit einem TPMS-Sensor (3) verbindbar ist und am Kopfkörper (111) angelenkt ist, um sich um eine Querachse (Z) zu drehen und die Einstellung der Position des TPMS-Sensors (3) zu ermöglichen;
wobei der einstellbare Einsatz (2) einen Innenkörper (21) umfasst, der ausgestattet ist mit einem zentralen Sitz (210) zum Einsetzen des Verbindungsmittels (4) und mit einem Eingriffsabschnitt (220), um dessen Verbindung mit dem Kopfkörper (111) zu ermöglichen
**dadurch gekennzeichnet, dass** der Eingriffsabschnitt (220) mindestens einen Schenkel (221) umfasst, der mit einem radialen Vorsprung (222) ausgestattet ist, der in ein entsprechendes radiales Loch (117) des Kopfkörpers (111) einführbar ist, um die gelenkige Verbindung zwischen dem einstellbaren Einsatz (2) und dem Kopfkörper (111) zu erreichen.

2. Ein Ventil (1) nach Anspruch 1, wobei der Schenkel (221) außerhalb oder innerhalb des Kopfkörpers (111) angeordnet ist.

3. Ein Ventil (1) nach irgendeinem der vorhergehenden Ansprüche, wobei der einstellbare Einsatz (2) einen Außenkörper (23) umfasst, der mit dem Innenkörper (21) verbunden ist, wobei der genannte Außenkörper (23) aus Kunststoffmaterial hergestellt ist.

4. Ein Ventil (1) nach Anspruch 3, wobei der Außenkörper (23) mindestens einen nachgebenden Abschnitt (235) aufweist, der als Manipulationssicherung dient.

5. Ein Ventil (1) nach Anspruch 3 oder 4, wobei der Außenkörper (23) mit einer oberen Fläche (231) ausgestattet ist, die eine Stützfläche für den TPMS-Sensor (3) bildet, und
umfassend
mindestens einen oberen Sitz (232), der so geformt ist, dass er die Unterseite des TPMS-Sensors (3) aufnimmt,
und/oder mindestens einen unteren Sitz (234), der so geformt ist, dass er zumindest teilweise den Kopfkörper (111) aufnimmt,
und/oder mindestens ein Paar seitlicher Vertiefungen (240).

6. Ein Ventil (1) nach irgendeinem der Ansprüche von 3 bis 5, wobei der genannte Innenkörper (21) und der genannte Außenkörper (23) einteilig aus Kunststoffmaterial hergestellt sind.

7. Ein Ventil (1) nach irgendeinem der Ansprüche von 3 bis 5, wobei der genannte Innenkörper (21) und der genannte Außenkörper (23) unterschiedliche Elemente sind, die mechanisch zusammengefügt sind, und wobei auch der Innenkörper (21) aus Kunststoffmaterial hergestellt ist.

8. Ein Ventil (1) nach irgendeinem der Ansprüche von 3 bis 5, wobei der genannte Innenkörper (21) und der genannte Außenkörper (23) unterschiedliche Elemente sind, die mechanisch zusammengefügt sind, und wobei der Innenkörper (21) aus Metall hergestellt ist.

9. Ein Ventil (1) nach Anspruch 7 oder 8, wobei der genannte Innenkörper (21) mittels mindestens eines unteren Anschlagelements (237) und mindestens eines oberen Anschlagelements (238) im Außenkörper (23) in Position gehalten wird.

10. Ein Ventil (1) nach irgendeinem der vorhergehenden Ansprüche, wobei der Kopfkörper (111) zwei einander zugewandte Seitenabschnitte (115) aufweist, die jeweils mit einem radialen Loch (117) versehen sind, das sich entlang der Querachse (Z) erstreckt, wobei die genannten Löcher (117) einander zugewandt sind und dazu ausgelegt sind, als Verdrehsicherungs-Sitze des einstellbaren Einsatzes (2) oder zumindest eines Teils davon zu dienen.

11. Ein Ventil-Sensor-System, das an verschiedene Anwendungssituationen angepasst werden kann, Folgendes umfassend:
- einem Reifenfüllventil (1) nach irgendeinem der Ansprüche von 1 bis 10;
- Verbindungsmittel (4);
- einem TPMS-Sensor (3), der mittels des Verbindungsmittels (4) mit dem einstellbaren Einsatz (2) verbunden ist,
wobei das Verbindungsmittel (4) den einstellbaren Einsatz (2) am Kopfkörper (111) fixiert.

## Revendications

1. Soupape de gonflage de pneumatiques (1) pouvant être associée à un capteur TPMS, ayant un axe de développement longitudinal (X) et comprenant :
une tige (8) se terminant dans une tête (11) équipée d'un corps de tête (111),
- un insert réglable (2) pouvant être associé à un capteur TPMS (3) au moyen d'un moyen de raccordement (4), et articulé sur le corps de tête (111) pour tourner autour d'un axe transversal (Z) et permettre le réglage de la position du capteur TPMS (3) ;
dans laquelle l'insert réglable (2) comprend un corps interne (21) équipé d'un siège central (210) pour l'insertion du moyen de raccordement (4), et d'une partie de mise en prise (220) pour permettre le raccordement de celui-ci avec le corps de tête (111) ;
**caractérisée en ce que** la partie de mise en prise (220) comprend au moins une jambe (221) équipée d'une saillie radiale (222) pouvant être insérée dans un trou radial correspondant (117) du corps de tête (111) pour obtenir un raccordement articulé entre l'insert réglable (2) et le corps de tête (111).

2. Soupape (1) selon la revendication 1, dans laquelle la jambe (221) est agencée à l'extérieur ou à l'intérieur du corps de tête (111).

3. Soupape (1) selon l'une quelconque des revendications précédentes, dans laquelle l'insert réglable (2) comprend un corps externe (23) raccordé au corps interne (21), ledit corps externe (23) étant composé de matière plastique.

4. Soupape (1) selon la revendication 3, dans laquelle le corps externe (23) comprend au moins une partie élastique (235) agissant comme une garantie d'inviolabilité.

5. Soupape (1) selon la revendication 3 ou 4, dans laquelle le corps externe (23) est équipé d'une surface supérieure (231) qui définit une surface de support pour le capteur TPMS (3), et comprenant au moins un siège supérieur (232) formé pour recevoir le fond du capteur TPMS (3), et/ou au moins un siège inférieur (234) formé pour recevoir au moins partiellement le corps de tête (111), et/ou au moins une paire d'évidements latéraux (240).

6. Soupape (1) selon l'une quelconque des revendications 3 à 5, dans laquelle ledit corps interne (21) et ledit corps externe (23) sont composés d'une pièce de matière plastique,

7. Soupape (1) selon l'une quelconque des revendications 3 à 5, dans laquelle ledit corps interne (21) et ledit corps externe (23) sont des éléments différents mécaniquement assemblés, et dans laquelle également le corps interne (21) est composé de matière plastique,

8. Soupape (1) selon l'une quelconque des revendications 3 à 5, dans laquelle ledit corps interne (21) et ledit corps externe (23) sont des éléments différents mécaniquement assemblés, et dans laquelle le corps interne (21) est composé de métal.

9. Soupape (1) selon la revendication 7 ou 8, dans laquelle ledit corps interne (21) est maintenu en position à l'intérieur du corps externe (23) au moyen d'au moins un élément de butée inférieur (237) et d'au moins un élément de butée supérieur (238).

10. Soupape (1) selon l'une quelconque des revendications précédentes, dans laquelle le corps de tête (111) comprend deux parties latérales (115) se faisant face et équipées chacune d'un trou radial (117) s'étendant le long de l'axe transversal (Z), lesdits trous (117) se faisant face et étant conçus pour agir comme des sièges de verrouillage, en rotation, de l'insert réglable (2) ou d'au moins une partie de celui-ci.

11. Système soupape-capteur qui peut être adapté à différentes situations d'utilisation, comprenant :
- une soupape de gonflage de pneu (1) selon l'une quelconque des revendications 1 à 10 ;
- un moyen de raccordement (4) ;
- un capteur TPMS (3) associé à l'insert réglable (2) au moyen du moyen de raccordement (4),
dans lequel le moyen de raccordement (4) fixe l'insert réglable (2) au corps de tête (111).
